# EUROPEAN PATENT APPLICATION

(11) **EP 4 844 044 A1**
(43) Date of publication of application: **25.11.2026**
(21) Application number: 26180666.5
(22) Date of filing: 22.05.2026
(51) Int. Cl.: C10G 2/00, C10K 3/02, C25B 1/04, F03G 4/00

(54) **LOW CARBON FUEL PRODUCTION FROM AIR USING GEOTHERMAL HEAT**

(30) Priority: 23.05.2025 AU 2025902015
(71) Applicant: Good Water Energy Ltd., Claremont, WA 6010 (AU)
(72) Inventor: Strange, Warren Ross, Claremont, Western Australia, 6010 (AU); Cavanagh, David, Como, Western Australia, 6152 (AU)
(74) Representative: K&L Gates LLP

(57) **Abstract**

A plant for producing a fuel for the propulsion of a vehicle, the plant comprising a power generator to generate power from geothermal heat, a bore extending from a surface to a geothermal reservoir within the earth's crust, a first fluid to flow between the at least one power generator and the geothermal reservoir such that the first fluid transfers geothermal heat from the geothermal reservoir to the at least one power generator to generate the power, a primary product supplying system powered by the power generator, to supply one or more primary product(s) for use in producing the fuel, and a fuel production system powered by the at least one power generator, comprising one or more chambers to convert a mixture comprising the one or more primary product into the fuel.

## Description

### CROSS-REFERENCE TO RELATED APPLICATION

This application claims the benefit of Australian Provisional Application No. 2025902015, filed 23 May 2025, which is incorporated herein by reference in its entirety for all purposes.

### TECHNICAL FIELD

The disclosure is directed to geothermal low carbon fuel production methods and systems. The disclosure includes a plant for producing a fuel for the propulsion of a vehicle. The disclosure also relates to a geothermal power supply and carbon capture system. The disclosure also relates to a geothermal power supply and water desalination system. The disclosure also relates to a geothermal power supply, water desalination and carbon capture system. The disclosure is additionally directed to a method of producing a fuel for the propulsion of a vehicle.

### BACKGROUND

The aviation industry is experiencing significant growth, with international air passenger movements projected to increase by around 220% between 2022-23 and 2049-50. This growth is driven by increased demand for air travel, both domestically and internationally, with Asia-Pacific leading the way. Technological advancements and investments in infrastructure are also contributing to the industry's expansion. As a result, the industry's fuel demand is projected to continue growing significantly in the coming years.

The main disadvantages of fuel production revolve around environmental impact, resource depletion, and potential health hazards. Fossil fuels, the dominant source of fuel, contribute significantly to greenhouse gas emissions and air pollution. Furthermore, they are non-renewable resources, raising concerns about long-term availability. Beyond fossil fuels, biofuel production can also have drawbacks, including land and water resource consumption, and potential emissions. Furthermore, the expenses involved in extracting, refining, and processing the fuel are a significant component of the final price charged to airlines. Fuel costs can account for a substantial portion of an airline's overall spending, impacting their profitability.

Accordingly, it would be advantageous to provide fuel, which is cost competitive to produce, is environmentally friendly in its production, and is a better value proposition to buy compared to other conventional fuels.

The present invention was conceived with the above shortcomings in mind

### SUMMARY

In a first aspect, the invention provides a plant for producing a fuel for the propulsion of a vehicle, the plant comprising: at least one power generator to generate power from geothermal heat; at least one bore extending from a surface to a geothermal reservoir within the earth's crust; a first fluid to flow between the at least one power generator and the geothermal reservoir such that the first fluid transfers geothermal heat from the geothermal reservoir to the at least one power generator to generate the power; at least one primary product supplying system, powered by the at least one power generator, to supply one or more primary product(s) for use in producing the fuel; and at least one fuel production system, powered by the at least one power generator, comprising one or more chambers to convert a mixture comprising the one or more primary products into the fuel. The invention may be advantageous in that the costs associated in producing fuels can be reduced (in comparison to conventional means).

The one or more primary products may comprise hydrogen gas. The at least one primary product supplying system may comprise an electrolyser to supply the hydrogen gas.

The one or more primary products may comprise fresh distilled water to feed to the electrolyser. The at least one primary product supplying system may comprise a desalination plant to supply the fresh distilled water.

The fuel may comprise syngas. The at least one fuel production system may comprise a Reverse Water Gas Shift (RWGS) reactor and wherein carbon dioxide and hydrogen are fed into the RWGS reactor to produce the syngas. The hydrogen fed into the RWGS reactor may be the hydrogen produced from the electrolyser.

The one or more primary products may comprise carbon dioxide. The at least one primary product supplying system may comprise a separator to extract the carbon dioxide from ambient air.

The separator may additionally supply fresh water to the electrolyser. The separator may additionally supply at least one of oxygen and nitrogen.

The fuel may comprise liquid hydrocarbons. The at least one fuel production system may comprise a Fischer-Tropsch (FT) synthesis chamber to convert syngas into the liquid hydrocarbons. The syngas fed into the (FT) synthesis chamber may be the syngas produced from the RWGS reactor.

The at least one fuel production system may comprise a distillation chamber to convert liquid hydrocarbons into at least one of olefins, naptha, jet fuel, heavy distillate, diesel, methane, and/or petrol/gasoline distillate, depending on the particular embodiment of the invention.

The liquid hydrocarbons fed into the distillation chamber may be the liquid hydrocarbons produced from the Fischer-Tropsch (FT) synthesis chamber.

The fuel may comprise eSAF.

The at least one fuel production system may comprise a hydrocracking unit.

In embodiments, the invention may be used to produce diesel, for example at a mine site, or aviation fuel, for example at an airport. The cost is likely to competitive with general oil industry refinery costs before shipping and land transport. In addition, the production of low carbon fuel at a mine site or airport will remove or reduce requirements for imports, exports and land transport of fuels for major industries.

The at least one power generator may be a turbine configured to produce a mechanical output from the first fluid, the power generated by the turbine may be the mechanical output, the mechanical output may power an electric generator to produce green electricity, and the turbine may produce exhaust fluid after production of the mechanical output.

In embodiments, residual heat in the exhaust fluid may provide heat to the RWGS reactor for producing the syngas. In embodiments, green electricity produced by the electric generator may provide heat to the RWGS reactor for producing the syngas.

In embodiments, residual heat in the exhaust fluid may provide heat to the (FT) synthesis chamber for producing the liquid hydrocarbons. In embodiments, green electricity produced by the electric generator may provide heat to the FT synthesis chamber for producing the liquid hydrocarbons.

In embodiments, residual heat in the exhaust fluid may provide heat to the distillation chamber. In embodiments, green electricity produced by the electric generator may provide heat to the distillation chamber.

In embodiments, residual heat in the exhaust fluid may power the separator to extract carbon dioxide from ambient air. In embodiments, green electricity produced by the electric generator may power the separator to extract carbon dioxide from ambient air.

The plant may further comprise a second turbine configured to be driven by the exhaust fluid to produce a power supply, the power supply driving a first air compressor, wherein the first air compressor draws in and compresses ambient air to provide a first compressed air supply, wherein the first compressed air supply supplies compressed ambient air to the separator to extract carbon dioxide.

The residual thermal energy in the exhaust fluid (after the first fluid has been used to generate green electricity through a heat exchanger in a binary cycle plant or used to generate green electricity in a direct steam plant) can be used to drive fans or air compressors to force or compress atmosphere air that can be delivered to a range of (off the shelf) carbon dioxide extraction devices or systems. In addition, there is sufficient residual thermal energy available to provide a heat source to the low carbon fuel production system.

Utilising residual thermal energy in this manner (to drive fans or air compressors in addition to providing a heat source to the low carbon fuel production system) may eliminate 70% of the electricity required to provide heat in a conventional low carbon fuel production system which, for example, utilises solar or wind energy for power generation.

In embodiments, residual heat in the exhaust fluid may power the desalination plant to supply fresh distilled water. In embodiments, green electricity produced by the electric generator may power the desalination to supply fresh distilled water.

The plant may further comprise a third turbine configured to be driven by exhaust fluid from the second turbine to produce a power supply to drive a second air compressor, wherein the second air compressor draws in and compresses ambient air to provide a first compressed air supply and a second compressed air supply, wherein the first compressed air supply pumps salt water from a salt water source to the desalination plant for salt to be extracted from the salt water, and wherein the second compressed supply pumps fresh distilled water produced from the desalination plant to the electrolyser.

The present disclosure is based on a realisation that Sustainable Aviation Fuel (SAF) (including Electronic Sustainable Aviation Fuel (eSAF)) can be produced at a cost competitive with the cost of diesel or Jet1 by using residual thermal energy from a multi-well geothermal plant (for example, using 5 wells) which can reduce the energy requirement in the SAF production process. By using the residual thermal energy in a manner to be described below, the cost of SAF production can be reduced by over 50% (compared to conventional means).

The plant may provide some of the following benefits: (1) low-cost fuels, (2) reduction of carbon dioxide and water vapour from the atmosphere which contribute global warming, (3) the fuel can be produced locally or onsite, such as, at major airports thereby reducing or eliminating the need for shipping imports and national transport of fuels. For example, Darwin has a total of 12 days of diesel storage and is reliant on imported diesel from other countries to keep the State running. The present disclosure may provide diesel security for Darwin and many other regions in Australia. (4) Production of SAF at Australian major airports will also provide fuel security in addition to removing the transport and import requirements and reducing carbon dioxide levels.

The advantage of utilising residual thermal energy from the geothermal power plant is that the plants may be: (i) more efficient (in comparison to other plants where the residual thermal energy is discarded or there is no waste thermal energy available from solar or wind energy systems, (ii) more environmentally friendly (in comparison to other plants where large areas of land are required for solar and wind energy systems or where the residual thermal energy is discarded into the atmosphere thereby adding to raising global temperatures/climate change) and, (iii) more cost efficient by reducing reliance on conventional heating methods. Little to no additional electricity (from the electrical grid) is required to provide heat and as such, the operating costs are reduced.

The advantage of a carbon dioxide from atmosphere supplying system is that: (1) by capturing and utilising carbon dioxide the amount of greenhouse gases in the atmosphere may be reduced, thereby mitigating the impacts of climate change, (2) the process of extracting carbon dioxide from the atmosphere may produce fresh water in addition to oxygen and nitrogen which can be collected and utilised in other processes or sold to third party users.

In a second aspect, the disclosure provides a method for producing a fuel for the propulsion of a vehicle, the method comprising: channelling heated fluid from a geothermal reservoir; generating a power supply from the heated fluid; supplying a primary product for use in producing the fuel; using the power supply to supply the primary product; and converting a mixture comprising the primary product into the fuel.

In a third aspect, the present disclosure provides a geothermal power supply and carbon capture system, comprising: a production bore for a heated fluid having a first temperature to flow from a geothermal reservoir to a surface; a first turbine driven by the heated fluid to produce a mechanical output; an electric generator powered by the mechanical output to produce electricity; an electrolyser for splitting fresh water supplied from a fresh water source into hydrogen and oxygen, wherein the electrolyser is powered by the electricity produced by the electric generator; a second turbine driven by exhaust fluid to produce a mechanical output, wherein the exhaust fluid is produced by the first turbine after production of the corresponding mechanical output; a first air compressor driven by the mechanical output from the second turbine, the first air compressor configured to draw in and compress ambient air to feed a first compressed air supply and a second compressed air supply; a separator for extracting at least one of carbon dioxide, fresh water, nitrogen, and oxygen from compressed air supplied thereto by the first compressed air supply; a pump driven the second compressed air supply to pump fresh water from the separator to the electrolyser, wherein the fresh water source comprises the separator; a cooler to cool exhausted exhaust fluid from the second turbine, wherein the exhausted exhaust fluid is produced after production of the second turbine's corresponding mechanical output; and an injection bore for the cooled exhausted exhaust fluid having a second temperature to flow from the surface to the geothermal reservoir, wherein the production bore and the injection bore are fluidly connected at the geothermal reservoir, and wherein the heated fluid and the cooled exhausted exhaust fluid are generated to circulate between the geothermal reservoir, the first turbine, the second turbine, and the cooler.

In a fourth aspect, the present disclosure provides a geothermal power supply and water desalination system, comprising: a production bore for a heated fluid having a first temperature to flow from a geothermal reservoir to a surface; a first turbine driven by the heated fluid to produce a mechanical output; an electric generator powered by the mechanical output to produce electricity; an electrolyser for splitting fresh water supplied from a fresh water source into hydrogen and oxygen, wherein the electrolyser is powered by the electricity produced by the electric generator; a second turbine driven by exhaust fluid to produce a mechanical output, wherein the exhaust fluid is produced by the first turbine after production of the corresponding mechanical output; a first air compressor driven by the mechanical output from the second turbine, the first air compressor configured to draw in and compress ambient air to feed a first compressed air supply and a second compressed air supply; a water desalination plant for extracting salt from salty water to produce at least one of fresh distilled water, and brine; a first pump driven by the first compressed air supply to pump salty water from a salty water source to the water desalination plant; a second pump driven the second compressed air supply to pump fresh distilled water from the water desalination plant to the electrolyser, wherein the fresh water source comprises the water desalination plant; a cooler to cool exhausted exhaust fluid from the second turbine, wherein the exhausted exhaust fluid is produced after production of the second turbine's corresponding mechanical output; and an injection bore for the cooled exhausted exhaust fluid having a second temperature to flow from the surface to the geothermal reservoir, wherein the production bore and the injection bore are fluidly connected at the geothermal reservoir, and wherein the heated fluid and the cooled exhausted exhaust fluid are generated to circulate between the geothermal reservoir, the first turbine, the second turbine, and the cooler.

In a fifth aspect, the present disclosure provides a geothermal power supply, water desalination and carbon capture system, comprising: a production bore for a heated fluid having a first temperature to flow from a geothermal reservoir to a surface; a first turbine driven by the heated fluid to produce a first mechanical output; an electric generator powered by the first mechanical output to produce electricity; an electrolyser for splitting fresh water supplied from a fresh water source into hydrogen and oxygen, wherein the electrolyser is powered by the electricity produced by the electric generator; a second turbine driven by a first exhaust fluid to produce a second mechanical output, wherein the first exhaust fluid is produced by the first turbine after production of the first mechanical output; a first air compressor driven by the second mechanical output, the first air compressor configured to draw in and compress ambient air to feed a first compressed air supply and a second compressed air supply; a water desalination plant for extracting salt from salty water to produce at least one of fresh distilled water, and brine; a first pump driven by the first compressed air supply to pump salty water from a salty water source to the water desalination plant; a second pump driven the second compressed air supply to pump fresh distilled water from the water desalination plant to the electrolyser, wherein the fresh water source comprises the water desalination plant; a third turbine driven by at least one of the first exhaust fluid and a second exhaust fluid to produce a third mechanical output, wherein the second exhaust fluid is produced by the second turbine after production of the second mechanical output; a second air compressor driven by the third mechanical output, the second air compressor configured to draw in and compress ambient air to feed a corresponding first compressed air supply and a corresponding second compressed air supply; a separator for extracting at least one of carbon dioxide, fresh water, nitrogen, and oxygen from compressed air supplied thereto by the corresponding first compressed air supply; a pump driven the corresponding second compressed air supply to pump fresh water from the separator to the electrolyser, wherein the fresh water source comprises the separator; a cooler to cool exhausted exhaust fluid from at least one of the second turbine and third turbine, wherein the exhausted exhaust fluid is produced after production of at least one of the second mechanical output and the third mechanical output; and an injection bore for the cooled exhausted exhaust fluid having a second temperature to flow from the surface to the geothermal reservoir, wherein the production bore and the injection bore are fluidly connected at the geothermal reservoir, and wherein the heated fluid and the cooled exhausted exhaust fluid are generated to circulate between the geothermal reservoir, the first turbine, the second turbine, the third turbine, and the cooler.

### BRIEF DESCRIPTION OF THE DRAWINGS

Embodiments of the disclosure are illustrated by way of example, and not by way of limitation, with reference to the accompanying drawings, of which:
Figure 1 is a schematic view of a plant for producing a fuel for the propulsion of a vehicle, illustrating how a geothermal well heat and power supply are integrated into fuel production.
Figure 2 is a schematic view illustrating how the heat and power supply of the geothermal well of the plant of Figure 1 are generated.
Figure 3 is a schematic view of an embodiment of the geothermal well of the plant of Figure 1.
Figure 4 is a schematic view illustrating how geothermal heat from the plant of Figure 1 powers a compressor which in turn powers a separator.
Figure 5 is a schematic view illustrating how geothermal heat from the plant of Figure 1 powers a compressor which in turn powers a desalination plant.
Figure 6 is another schematic view illustrating a plant according to an embodiment of the disclosure.

Embodiments will now be described more fully hereinafter with reference to the accompanying drawings, in which various embodiments, although not the only possible embodiments, of the disclosure are shown. The disclosure may be embodied in many different forms and should not be construed as being limited to the embodiments described below.

### DETAILED DESCRIPTION

The term "first fluid" has been used herein to refer to the hot fluid emerging from the geothermal well to be used to generate power.

The term "second fluid" has been used herein to refer to the fluid in binary cycle plants which is heated by the first fluid in a heat exchanger so that the second fluid may be used to generate power.

The term "exhaust fluid" has been used herein to refer to the remaining or unused fluid in the turbines and associated flash tanks after the generation of power.

The term "exhausted exhaust fluid" has been used herein to refer to the remaining or unused fluid in the third or fourth turbines and associated flash tanks after the generation of power.

The term "waste fluid" has been used herein to refer to the cooled fluid flowing into the geothermal well to be heated by the earth's crust.

The term "bore" has been used herein to refer to a man-made excavation or structure designed to access geothermal heat, and which involves drilling or digging into the earth to reach an underground layer or reservoir enabling the retrieval of the geothermal heat using water and pumps. The technical terms "bore" and "well" can be used interchangeably.

The term "injection bore" has been used herein to refer to the bore in which the waste fluid flows into the geothermal well to be heated by the earth's crust. The technical terms "injection bore" and "channel" can be used interchangeably.

The term "production bore" has been used herein to refer to the bore in which the first fluid flows out from the geothermal well after being heated by the earth's crust. The technical terms "production bore" and "channel" can be used interchangeably.

The term "fresh water" has been used herein to refer to water with a low salt concentration and excludes sea water. It is essentially water that is not salty.

The term "geothermal reservoir " has been used herein to broadly refer to any subsurface area of high heat, that can be used to heat a fluid. For example, the term includes bedrock at high temperatures, often 250 degrees or more, but may also include subsurface geological formations. These are all considered geothermal reservoirs for the purpose of the present disclosure.

The term "system" has been used herein to refer to a set of interconnected or interacting elements that work together to achieve a common purpose or function. The term "device" has been used herein to refer to a thing made or adapted for a particular purpose. The technical terms "system" and "device" can be used interchangeably if the purpose or function to which they relate are the same.

### The bore and extraction of geothermal energy from a geothermal reservoir

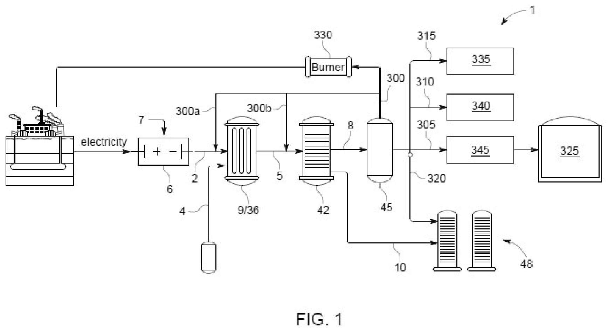

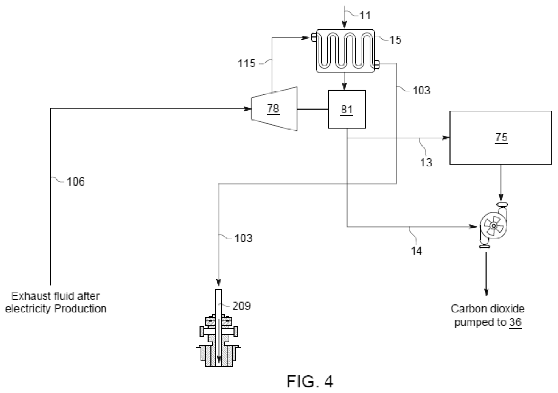

Figures 1 - 6 illustrate a plant (1) for producing a fuel (5) for the propulsion of a vehicle, the plant (1) comprising: at least one power generator (3) to generate power from geothermal heat; at least one bore (200) extending from a surface (203) to a geothermal reservoir (206) within the earth's crust; a first fluid (100) generated to flow between the at least one power generator (3) and the geothermal reservoir (206) such that the first fluid (100) transfers geothermal heat from the geothermal reservoir (206) to the at least one power generator (3); at least one primary product supplying system (6) powered by the at least one power generator (3) to supply one or more primary products for use in producing the fuel (5); and at least one fuel production system comprising one or more chambers (9) powered by the at least one power generator (3) for converting a mixture comprising the one or more primary product into the fuel (5).

The surface (203) may be the ground surface and the at least bore (200) extends from the ground surface (203) downwardly to the geothermal reservoir (206). The at least one bore (200) has a first end (200a) located on the ground surface (203) and a second end (200b) located in the geothermal reservoir (206). The first end (200a) of the bore (200) may have a well head (12) which controls the flow of fluids entering and exiting the bore (200).

In one embodiment (not shown), the at least one bore may be a singular bore to channel dry steam from the geothermal reservoir to the ground surface. The dry steam may be used to drive the at least one power generator to generate power to power a primary product supplying device.

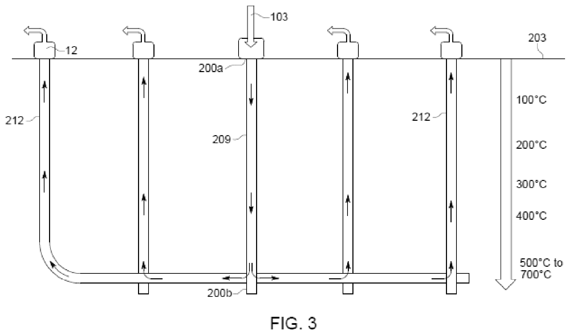

In a first embodiment (shown in Figure 3), the at least one bore (200) may comprise an injection bore (209) and a production bore (212). Waste fluid (103) flows into the injection bore (209) to the geothermal reservoir (206) to be heated by the earth's crust. The first fluid (100) flows out of the production bore (212) from the geothermal reservoir (206) to be used by the at least one power generator (3) to generate power to power the at least one primary product supplying device (6). The first fluid (100) will have a high temperature and pressure after being heated by the earth's crust.

As shown in Figure 3, the injection bore (209) and the production bore (212) may be spaced apart from each other. Each of the bores (209), (212) may extend from the ground surface (203) to the geothermal reservoir (206) and are fluidly connected to each other at the geothermal reservoir (206). In the injection bore (209), waste fluid (103) flows therethrough from the first end (200a) to the second end (200b). Upon reaching the second end (200b), the waste fluid (103) changes its direction of flow (u-turns) and flows from the second end (200b) to the first end (200a) thereby emerging from the production bore (212) as first fluid (100).

As further shown in Figure 3, the plant (1) may have more than 2 spaced apart bores (200), such as, the injection bore (209) and a plurality of production bores (212). The plurality of bores (200) may have similar features and operate in a similar fashion to the plurality of wells described in WO 2023087064 and AU 2021106085 the disclosures of which are incorporated herein by reference in their entireties for all purposes.

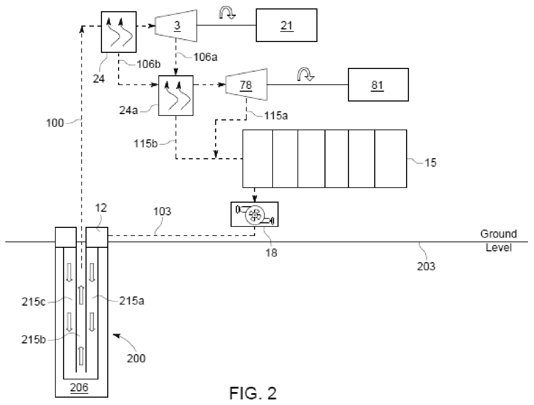

In a second embodiment as shown in Figure 2, the at least one bore (200) may be a singular, multi-channelled bore. The channels 215 may extend from the ground surface (203) and are fluidly connected to each other proximate the second (200b) of the bore (200). Waste fluid (103) is generated to move within the multichannel bore (200) such that it flows from the ground surface (203) towards the geothermal reservoir (206) along one channel. The first fluid (100) is generated to flow from the geothermal reservoir (206) towards the ground surface (203) along another channel. In the example shown in Figure 2, the at least one bore (200) has 3 channels (215a), (215b), (215c) therein and is such that waste fluid (103) flows from the first end (200a) to the second (200b) along channels (215a), (215c), and upon reaching the second end (200b), the waste fluid (103) changes its direction of flow (u-turns) and flows towards the first end (200a) along channel (215b) as first fluid (100).

The at least one power generator (3) produces exhaust fluid (106) after the first fluid (100) has driven the at least one power generator (3) to generate power to power the at least one primary product supplying device (6).

When the temperature of the exhaust fluid (106) is insufficient to convert into useful work (for example, after flowing through the second flash tank 24a and the third (78) or fourth turbine (87)), then the exhaust fluid (106) becomes "exhausted" exhaust fluid (115) which is cooled in the cooler (15) for recirculation in, and re-heating by the earth's crust.

Waste fluid (103) is formed after "exhausted" exhaust fluid (115) has been cooled by a cooler (15) prior to entering the injection bore (209) for recirculation in, and re-heating by the earth's crust.

The fluids (100), (103), (106), (115) are generated to circulate between the geothermal reservoir (206), the at least one power generator (3), and the cooler (15).

In use, waste fluid (103) entering the injection bore (209) through a well head (12) has a second temperature which is lower than the temperature of the earth's crust. Typically, the waste fluid (103) will have a temperature between 50°C - 60°C. The temperature of the earth's crust increases with distance from the ground surface, as seen in Figure 3, from 100°C at around 1000 metres beneath the ground surface (203), to between 500°C - 700°C at around 10,000 metres beneath the ground surface (203). The length of the bores (209), (212) may be a few thousand meters up to about 12,000 metres into the earth's crust. Due to the temperature difference between the waste fluid (103) flowing into the injection bore (209) and the temperature of the earth's crust, the waste fluid (103) will absorb geothermal energy such that the first fluid (100) exiting the production bore (212) at the well head (12) will have a temperature between 150°C and 300°C depending on the location and depth of the bore (212) and the geology of the surrounding area. The first fluid (100) exiting the production bore (212) may be passed through a first flash tank (24) to generate steam which will be used to drive the at least one power generator (3). The remaining or unused fluids from the first flash tank (24) and the power generator (3) form the exhaust fluids (106a), (106b) which may be passed through a second flash tank (24a) to generate steam which will be used to drive another power generator (78), (87). The remaining or unused fluids from the second flash tank (24a) and power generator (78), (87) form the exhausted exhaust fluids (115a), (115b). The exhausted exhaust fluids (115a), (115b) are then passed through a cooler (15) to form the waste fluids (103).

The arrangement shown in Figure 2 uses a multi-flash system whereby the first fluid (100) is flashed in two or more stages to maximize energy extraction. This process involves using two or more flash tanks (24), (24a) each operating at a different pressure, to separate steam and liquid. The first flash tank (24) reduces pressure, causing some of the hot water to vaporize, and the resulting steam is used to drive a turbine (3). The remaining liquid/exhaust fluid from the first flash tank 24 is then flashed again in the second tank (24a) at a lower pressure, producing additional steam. This multi-stage flashing process increases the total amount of steam produced and thus the power generated.

The flow of the waste fluid (103) prior to entering the injection bore (209) may be configured to comprise a start-up pump (18) which initiates the circulation of the first fluid (100), the exhaust fluid (106), the exhausted exhaust fluid (115), and the waste fluid (103) between the geothermal reservoir (206), the at least one power (3), and the cooler (15) before thermal syphoning takes effect. Once the fluids (100), (106), (115), (103) are circulating due to the thermal syphoning effect, the start-up pump (18) is no longer required to maintain circulation and it is turned off.

The thermal syphoning effect feeds the waste fluid (103) into the injection bore (209) at a first temperature and draws out the first fluid (100) from the production bore (212) at a second temperature, whereby the second temperature is greater than the first temperature. This effect occurs when waste fluid (103) at a temperature of approximately 50°C is drawn down the injection bore (209) to be heated by the earth's crust. The thermal syphoning effect is responsible for pushing the first fluid (100) to the surface (203) of the production bore (212), where this delivery of thermal energy to the surface (203) requires no energy (such as, electricity from the grid) input to maintain the thermal energy flow.

To start the thermal syphoning effect in the bores (209), (212) a small amount of water movement is required and this will take a small 10KW start-up pump (18) (discussed below) to initiate this flow, or a store of ambient temperature water held in an elevated storage tank that can be delivered into the injection bore (209) by gravity and water head pressure which would avoid the requirement for additional energy. The start-up pump (18) is only used to initiate circulation between geothermal reservoir (206), the at least one power generator (3), and the cooler (15) and is not required after start-up. As soon as a volume of the cooler waste fluid (103) is added into the injection bore (209), the weight of the newly added liquid will be heavier than the weight of the hotter liquid (103) inside of the injection bore (209) and a flow (of the first fluid (100)) from the well head (12) will increase as the cooler liquid (103) continues to be added and drawn into the bore (209). Within a few minutes, the start-up pump (18) can be turned off as the thermal syphoning effect will generate the flow and thermal energy production.

### Turbines and green electricity generation

The at least one power generator (3) may be a steam turbine which converts thermal energy of the steam into mechanical energy by using the steam's expansion to rotate a rotor. Turbine blades mounted on the rotor are struck by the steam causing them to spin, thus rotating the rotor.

The plant (1) may be a dry steam plant which uses dry steam directly from the geothermal reservoir (206) to turn the turbine (3). The steam, which is at high temperatures of 160°C to 300°C and high pressure drives the turbine (3) which is connected to an electric generator (21) to produce green electricity.

As shown in Figure 2, the plant (1) may be a flash steam plant whereby the first fluid (100) exiting the production bore (212) is a hot fluid under high temperature (between 150°C and 300°C) and pressure. This hot fluid (100) is fed into a first flash tank (24) which causes the hot liquid (100) to rapidly vaporise into steam. The steam then drives the turbine (3) which is connected to an electric generator (21) that produces green electricity.

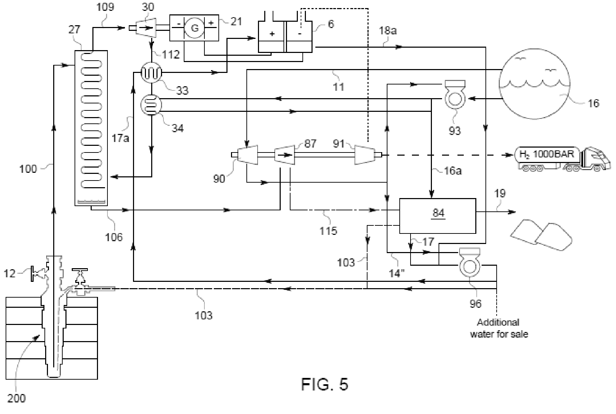

The plant (1) may be a binary cycle power plant (see Figure 5) that utilises a two-fluid system (known as an ORC system) to extract heat from the geothermal reservoir (206) and convert it into green electricity. This method is particularly advantageous when the first fluid (100) is below the temperature required for traditional dry steam or flash steam systems, making it suitable for low temperature geothermal sources. In the binary cycle plant (1), the first fluid (100) is fed to a heat exchanger (27) to heat a second fluid (109). The second fluid (109) is vaporised by the geothermal heat of the first fluid (100) and the steam drives a second turbine (30) which in turn drives the electric generator (21) to produce green electricity. Exhaust fluid (112) from the second turbine (30) driven by steam from the second fluid (109), is condensed back into liquid form by a condenser (33) and returned to the heat exchanger (27) to be reheated by the first fluid (100) again. The second fluid (109) has a lower boiling point than the first fluid (100) and may be water or N pentane. In the binary cycle plant, thermal energy in the second fluid (109) drives the steam turbine which is connected to the electric generator (21) that produces green electricity.

In some embodiments, the turbines (3), (30) may be a screw expander, turbine, ORC turbine, engine, steam engine or water wheel that converts energy from the fluids (100), (109) into a mechanical output in the form of a rotary or piston force. This mechanical output can directly or indirectly drive a pump, or a compressor or alternatively can be used to drive a generator (21) for green electricity generation.

Advantageously, the turbines (3), (30) used to generate power may be an ORC (Organic Rankine Cycle) turbine which is a type of turbine used to generate green electricity from low temperature geothermal sources. ORC turbines offer the ability to utilize low temperature heat sources compared to other conventional turbines.

### Residual thermal energy after green electricity production

In the flash steam plant (1) described above, residual thermal energy is the energy remaining in the exhaust fluid (106a - unused steam) that exits the first turbine (3) and the energy remaining in the exhaust fluid (106b - unflushed fluid) that exits the first flash tank (24) after the first fluid (100) has passed through to be used to generate green electricity.

In the binary cycle plant described above, residual thermal energy is the energy remaining in the exhaust fluid (106) that exits the heat exchanger (27) after the first fluid (100) has been used to heat the second fluid (109).

The pressure and temperature of the exhaust fluid (106) is less than the pressure and temperature of the first fluid (100). However, the exhaust fluid (106) still carries a significant amount of thermal energy which may be used to provide mechanical energy requirements such as pumping or compressing or provide heating for several processes such as chemical reactions or driving a whole range of spin-off industries such as carbon dioxide capture and water desalination. This residual thermal energy would normally be discarded to the atmosphere.

The exhaust fluid (106) with the residual thermal energy may have a temperature of 75° C to 85° C which is sufficient to drive a steam turbine to produce a mechanical output which in-turn drives an air compressor (described below) which may be used in an air-cooling system (described below) and/or a desalination plant (described below). The desalination plant or air-cooling system typically removes around 20° C to 25° C from the exhausted exhaust fluid (115), which provides a re-injection temperature of around 55° C to 65° C back into the geothermal syphoning system.

### Hydrogen production device and system

The at least one primary product supplying device (6) may be an electrolyser (6) for generating green hydrogen via electrolysis of water. Fresh water supplied from a fresh water supplying device is fed through a water line (7) connected to a water inlet in the electrolyser (6). Electrical power from the electric generator (21) is transferred via conduits or cables to a cathode and an anode of the electrolyser (6) to set-up an electrical circuit. The circuit transfers electrons from a first, anode, side of the electrolyser (6) to a second, cathode, side of the electrolyser (6).

The two sides of the electrolyser (6) are separated by a diaphragm, which along with the anode and cathode, is submersed in electrolyte solution to complete the electrolyser (6).

As the circuit of the electrolyser (6) is energised, the electrolyte solution which may be fresh water, reacts around the anode producing hydrogen ions (protons) with a positive charge, electrons (with a negative charge) and oxygen. The oxygen can be drawn off the electrolyser (6) at an oxygen outlet.

In an electrolyser (for example, a PEM electrolyser), the diaphragm separating the two sides of the cell is a solid, plastic material. As the water is split on the anode side, the protons migrate across the diaphragm towards the cathode. At the same time, the electrons flow in the electrical circuit from the anode to the cathode, whereupon the protons combine with the electrons at the cathode to produce hydrogen. The hydrogen is drawn from the electrolyser (6) into a hydrogen line (2) and directed to an RWGS reactor (36) or a storage tanks. The storage tank can be stationary or transportable.

It is contemplated that other types of electrolysers (6) could be driven in the plant (1), for example, solid oxide electrolysers or alkaline electrolysers.

The electrolyte solution may be constantly topped up with water from a separator (75) to sustain the hydrogen producing reaction in the electrolyser (6).

The electric generator (21) preferably generates a DC current and delivers this directly to the cathode, negative terminal, and/or anode, positive terminal, on the electrolyser (6).

### Syngas production

The at least one chamber (9) for converting a mixture comprising the primary product into the fuel may be a Reverse Water Gas Shift (RWGS) reactor (36) where carbon dioxide and hydrogen react together to produce syngas. The hydrogen produced in the electrolyser (6) may be fed therefrom through a hydrogen line (2) connected to a hydrogen inlet in the RWGS reactor (36). The carbon dioxide supplied by a carbon dioxide supplying device may be fed through a carbon dioxide line (4) connected to a carbon dioxide inlet in the RWGS reactor (36).

The reaction in the RWGS reactor (36) is an endothermic reaction meaning that heat is required for this reaction to occur. The heat may be supplied by the green electricity produced by the electric generator (21). In some embodiments, the heat is supplied by the residual thermal energy in the exhaust fluid (106). Utilising residual thermal energy in this manner is advantageous in that it reduces the use of electricity needed to power the RWGS reactor (21) by up to 70% (in comparison to conventional low carbon fuel production systems which, for example, utilise solar or wind energy for power generation and which do not have an excess or residual heat source available).

The RWGS reactor (36) has an outlet to a syngas line (5) through which the syngas produced therefrom may be fed to an FT Synthesis chamber (42) or it may be fed to a storage tank. The syngas may be used as a feedstock for producing a wide range of chemical products, including liquid and gaseous hydrocarbon fuels, alcohols, acetic acid, dimethyl ether and many other chemical products. The syngas may also be used as a supplement to diesel or gasoline in some dual-fuel engines thereby reducing the amount of traditional fuel needed.

In an embodiment (not shown), unreacted gases (gases which are not used to make the syngas) in the RWGS reactor (36) are channelled out from the reactor, separated, and recycled back into the reactor to be used in making the syngas. The recycling of unreacted gas in this manner is advantageous in that it reduces the amount of carbon dioxide that is sourced from other sources.

### Production of liquid hydrocarbons

The plant (1) may further comprise a Fischer-Tropsch (FT) synthesis chamber (42) where the syngas produced by the RWGS reactor (36) may be converted into liquid hydrocarbons. The syngas may be fed through the syngas line (5) connected to a syngas inlet in the FT Synthesis chamber (42).

The FT synthesis process requires heat which may be provided by the green electricity produced by the electric generator (21). In some embodiments, the heat is supplied by the residual thermal energy in the exhaust fluid (106). Utilising residual thermal energy in this manner is advantageous in that it reduces the use of electricity needed to power the FT Synthesis chamber (42) by up to 70% (in comparison to conventional low carbon fuel production systems which, for example, utilise solar or wind energy for power generation and which do not have an excess or residual heat source available).

The FT synthesis chamber (42) has a first outlet to a liquid hydrocarbons line (8) through which the liquid hydrocarbons produced therefrom may be fed to a distillation chamber (45) or it may be fed to a storage tank. The FT synthesis chamber (42) has a second outlet to a wax line (10) through which wax produced therefrom may be fed to a hydrocracking unit (48). The FT wax is a byproduct synthetic wax generated in the production of liquid hydrocarbons. The FT wax may be refined in a hydrocracking unit (48) to convert the heavy, low-value FT wax into high-value, light hydrocarbons like gasoline, jet fuel, and diesel which may be used as fuels, blending components, or as feedstocks for the petrochemical industry. Hydrocracking involves breaking down long-chain paraffins in the FT wax in the presence of hydrogen and a catalyst, typically at high temperatures and pressures.

### Distillation and eSAF production

The plant (1) may further comprise the distillation column (45) to separate the liquid hydrocarbons into fractional distillates based on boiling points. As illustrated in Figure (1), the liquid hydrocarbons from the FT synthesis chamber (42) are fed into the distillation column (45) via the liquid hydrocarbon line (8). Once in the distillation column (45), the liquid hydrocarbon is heated and vapourised. The vapour is condensed at different heights in the column (45) to obtain the fractional distillates which may comprise, olefins (315), gasoline, naptha (310), jet-fuel (305), diesel fuel, and heavy oils (320). The fractional distillates may further be processed or refined to remove impurities and to improve their qualities and properties. The processing may be, for example, polishing (345), oligomerisation (335), hydrogenation (340) or hydrocracking (48).

Polishing (345) may be used to remove trace impurities or contaminants from distillates such as the jet-fuel (305) distillate or diesel. In one embodiment, polishing of jet-fuel (305) is used to produce eSAF (325). Unlike simple fuel filtering, which occurs at the point of use, fuel polishing is a proactive production and a maintenance procedure that ensures that (stored) fuel remains in optimal condition for extended periods. Polishing may include filtration whereby multi-stage filters remove large debris and finer particles, or water separation where specialised equipment extracts free and emulsified water to prevent microbial growth and corrosion, or centrifugation where centrifugal force is used to separate impurities from fuel, or biocide treatment which eliminates bacteria and fungi in cases of microbial contamination.

Oligomerization (335) is a chemical process where short-chain unsaturated hydrocarbons such as olefins (315) are combined with a catalyst to create longer-chain molecules, also known as oligomers. Oligomerization can convert the olefins (315) into longer-chain hydrocarbons, which are used as gasoline and other fuels.

Hydrogenation (340) of naphtha (310) is a process that adds hydrogen atoms to naphtha (310), typically in the presence of a catalyst. Hydrogenation can be used to reduce or saturate the naphtha, (meaning it reduces the number of double or triple bonds in the molecule) to improve its stability and quality

Hydrocracking (48) of heavy distillates (320) is a refining process involving using hydrogen and a catalyst to break down larger hydrocarbon molecules into smaller ones (like those found in gasoline and diesel) and can also remove impurities like sulphur and nitrogen leading to cleaner-burning fuels. Hydrocracking may upgrade heavy distillates into high-value transportation fuels.

A by-product from the distillation of liquid hydrocarbons in the distillation chamber (45) is flue gas which exits the chamber (45) through a flue gas line (300) to be recycled. The flue gas is an exhaust gas which may contain gases such as carbon dioxide, water vapour, carbon monoxide, nitrogen and oxygen. The different gases in the flue gas may be separated and recycled, for example, the carbon dioxide is recycled into the RWGS reactor through a flue gas carbon dioxide line (300a) to make the syngas, and the carbon monoxide is recycled into the FT synthesis chamber (42) through a flue gas carbon monoxide line (300b) to maintain the desired hydrogen/carbon monoxide ratio and to control the overall gas composition. The recycling of flue gas in this manner is advantageous in that it reduces the amount of gas, such as carbon dioxide, that may be sourced from other sources.

In an embodiment, any excess flue gas which is not recycled may be burned off in a burner (330) to produce carbon dioxide which is then captured in a cardon dioxide supplying device/system (described below) and used as feedstock in the RWGS reactor (36).

In one embodiment (not shown), the power required to refine the fractional distillates may be supplied by the green electricity produced by the electric generator (21). In some embodiments, the power required to refine the fractional distillates may be supplied by the residual thermal energy in the exhaust fluid (106).

In one embodiment (not shown), the fuel is SAF (Sustainable Aviation Fuel), which is a type of jet fuel made from renewable sources. SAF is made from a wide range of feedstocks such as: waste oils and fats, municipal solid waste (carbon-based waste that comes from households and businesses i.e., product packaging, grass clippings, furniture, clothing, bottles, food scraps and newspaper), cellulosic waste (this comes from excess wood, agricultural waste such as corn stalks, and forestry residues such as branches and leaves that are not tradeable), cover crops such as camelina, carinata, and pennycress (cover or rotational oil seed crops that are grown in rotation with wheat and other cereal crops within the same year, when the land would otherwise be left fallow (unplanted) as part of a normal crop rotation programme), non-biogenic alternative fuels (these include 'power-to-liquid', which typically involves creating jet fuel from carbon sources such as industrial point source waste gases or, direct air captured carbon, combined with green hydrogen produced using renewable energy powered electrolysers), Jatropha (a plant that produces seeds containing inedible lipid oil that can be used to produce fuel), Halophytes (salt marsh grasses and other saline habitat species that can grow either in salt water or in areas affected by sea spray where plants would not normally be able to grow), Algae (these are microscopic plants that can be grown in plastic sleeves (micro algae) or polluted or salt water, deserts and other inhospitable places).

There are different ways, which are well known in the art, in which SAF is produced. For example, one such way generally includes: (a) collecting used cooking oil, (b) heating the cooking to enhance its fluidity, (c) filtering the hot oil to remove impurities, (d) heating the oil again at a high temperature and injecting hydrogen to produce a chemical reaction with water and oil as a by-product, (e) the oil + water by-product is cooled down and the oil is separated from the water, (f) the oil is heated again and enriched with gases including hydrogen to transform the oil into SAF, (g) the SAF is blended with fossil fuel so it can be used as jet fuel.

In one embodiment (not shown), the green electricity produced by the electric generator (21) may be used to produce the SAF, for example, to heat the cooking oil to enhance its fluidity and/or heat the oil again at a high temperature when injecting hydrogen to produce a chemical reaction, and/or heat the oil again when enriching it with gases including hydrogen to transform the oil into SAF. In some embodiments, the power required to produce the SAF may be supplied by the residual thermal energy in the exhaust fluid (106).

In one embodiment (not shown), the fuel may be methane. In road transport vehicles, methane is mostly used in compressed form (compressed natural gas, CNG, or compressed biogas, CBG) in light-duty vehicles. The methane may be produced through methanation where syngas is converted into methane. In one embodiment, the syngas for methane production may be supplied by the RWGS reactor (36). In one embodiment the green electricity produced by the electric generator (21) may be used to produce the methane. In one embodiment, the residual thermal energy in the exhaust fluid (106) may be used in the methane production.

### Carbon dioxide production

The plant (1) may further comprise a carbon dioxide supplying device for extracting carbon dioxide from ambient air (11) and supplying the extracted carbon dioxide to the RWGS reactor (36) to produce the syngas. The carbon dioxide supplying device may be a separator (75). The carbon dioxide supplying device may be similar to the carbon capture device described in WO 2023087064.

A third turbine (78) driven by the residual thermal energy in the exhaust fluids (106) powers a first compressor (81) configured to draw in and compress ambient air (11) to feed to a first compressed air supply (13), a second compressed air supply (14), and a third compressed air supply (not shown). The first compressed air supply (13) supplies compressed air to the separator (75) to extract carbon dioxide therefrom. The second compressed air supply (14) is directed to drive a pump to force the carbon dioxide extracted by the separator (75) to the carbon dioxide line (4) connected to the carbon dioxide inlet in the RWGS reactor (36). The third compressed air supply drives the start-up pump (18).

In some embodiments, the first compressor (81) may have additional air supplies to drive pumps, for example, a fourth compressed air supply to drive a pump to force water additionally extracted from the separator (75) to the water line (7) connected to the water inlet in the electrolyser (6). To this end, the separator (75) may also be a fresh water supplying device.

In some embodiments, the air compressor (81) may an electric air compressor which is powered by the green electricity produced by the electric generator (21).

### separator

The separator (75) may be configured to output at least one of nitrogen, oxygen, and water in addition to the carbon dioxide extracted from the compressed ambient air supply (11). In tropical environments (regions near the earth's equator characterized by consistently high temperatures, high humidity, and abundant rainfall) the water extracted by the separator (75) from the ambient air (11) is sufficient for all hydrogen production (by the electrolyser (6)) and fuel production requirements. With this water extraction capacity (that is, during the carbon dioxide and other element extraction from atmosphere), there is no requirement for a desalination or water treatment plant (described below), other than to provide a low-cost water supply to other industrial or residential customers and to provide cooling of the exhausted exhaust fluid (115) before re-injection.

In some embodiments the separator (75) comprises a filtration system. In some embodiments the separator comprises a sorbent/solvent separation system. In further embodiments, the separator comprises a membrane separation system. In still further embodiments, the separator comprises a distillation separation system.

A direct air capture (DAC) filter can also be used to extract carbon dioxide directly from the compressed ambient atmosphere air. These filters may use solid direct air capture technology where the filter chemically binds with the carbon dioxide. These filters can store the carbon dioxide therein which can be released with the application of heat. A portion of the captured carbon dioxide could thus be stored and transported to supply the RWGS reactor (36) to produce syngas or support other industries such as food processing.

In some embodiments, the plant (1) also directs residual thermal energy in the exhaust fluid (106) to the separator (75) in the form of heat. Increasing an operating temperature of the separator (75) may improve the efficiency of the carbon dioxide extraction process within the separator (75).

In some embodiments, other gases such as argon, methane, nitrous oxide, and trace amounts of other gases like helium, neon, krypton, and xenon may be extracted from the ambient air (11) using various known processes such as fractional distillation. In these embodiments, the power required for the extraction of these gases may be by the green electricity produced by the electric generator (21) or by the residual thermal energy in the exhaust fluid (106). These gases may be used as feedstocks in the production of fuels or fertilizers such as Urea Ammonium Nitrate (UAN)

### Cooler and Condenser

As ambient air (11) is drawn in by the first compressor (81), this air is drawn through the cooler (15) and the condenser (33) such that they are in effect providing an air-cooling system. The cooler (15) reduces the temperature of the "exhausted" exhaust fluid (115) by facilitating dissipation of thermal energy from the heated liquid (115) to the ambient air drawn into the cooler (15) before the liquid (as waste fluid (103)) is directed back to the injection bore (209).

The condenser (33) reduces the temperature of the exhaust fluid (112) from the second turbine (30) driven by steam from the second fluid (109) by facilitating dissipation of thermal energy from the heated liquid to the ambient air drawn into the condenser (33) before the liquid is directed back to the heat exchanger (27) for re-heating.

In use, the first fluid (100) exiting the production bore (212) may be at a temperature of about 150°C - 300°C. The waste fluid (103) entering the injection bore (209) may be at a temperature of about 5°C - 10°C above a temperature of the ambient air drawn into the cooler (15). The cooler (15) requires a large surface area to reduce the temperature of the heated liquid (115) to within 5°C - 10°C of a temperature of the ambient air (11). For example, if the ambient air (11) enters the cooler (15) at about 25°C, the exhausted exhaust fluid (115) can be cooled to about 30°C - 35°C. The temperature differential created by the cooler (15) is sufficient to maintain the thermal syphoning effect between the fluids (100), (106), (115) and (103).

### Desalination plant

The plant (1) may further comprise a fresh water supplying device such as, for example, a multi-effect distillation (MED) desalination plant (84). The desalination plant (84) may be similar to the desalination plant described in AU 2021100827 the disclosure of which is incorporated herein by reference in its entirety for all purposes.

The MED plant (84): (i) receives salt water from, for example, the sea or a saltwater bore (16), (ii) extracts salt from the salt water, and (iii) produces fresh distilled water (17) and brine (19) as by-products after the extraction of salt from the salt water. The fresh distilled water (17) produced from the desalination plant (84) may be: (i) pumped to the electrolyser (6) to be used in the electrolysis process, and (ii) used in the condenser (33) to reduce the temperature of the exhaust fluid (112) so it may be directed to the heat exchanger (27) for re-heating. The condenser (33) will effectively be a water-cooling system. As illustrated in Figure 5, the freshwater condenser (33) draws thermal energy from the exhaust fluid (112) and the heated fresh water (17) is supplied to the electrolyser (6) via the water inlet (7). The freshwater condenser (33) provides two advantages: (1) it heats the fresh distilled water 17 from the MED plant (84) before delivery to the electrolyser (6) for better hydrogen production efficiency; and (2) it provides a fresh water (low maintenance) cooler and condenser for the exhaust fluid (112).

The MED plant (84) itself may be used as the cooler (15) for cooling the exhausted exhaust fluid (106). The exhausted exhaust fluid (106) may pass through the MED desalination plant (84) to be cooled within the plant before being directed to the injection bore (209) as waste fluid (103).

A fourth turbine (87) driven by the residual thermal energy in the exhaust fluid (106) powers a second compressor (90) configured to draw in and compress ambient air (11) to feed to a first compressed air supply (13") and a second compressed air supply (14"). The first compressed air supply (13") is directed to a pump (93) for pumping saltwater from the sea or saltwater bore (16) to the MED plant (84). The second compressed air supply (14") is directed to a pump (96) for pumping the fresh distilled water (17) produced by the MED plant (84) to the electrolyser (6) or to a storage tank. In some embodiments, the second compressor (90) may have additional air supplies to drive pumps, for example, a pump for pumping the brine produced by the MED plant (84) to a storage tank.

In some embodiments, the plant (1) may comprise the carbon dioxide supplying device 75 for extracting carbon dioxide from ambient air (11) without the desalination plant (84). For example, in tropical environments (regions near the earth's equator characterized by consistently high temperatures, high humidity, and abundant rainfall) the water extracted by the separator (75) from the ambient air (11) is sufficient for all hydrogen production (by the electrolyser (6)) and fuel production requirements, such as supply of carbon dioxide to the RWGS reactor (36). With this water extraction capacity (that is, during the carbon dioxide and other element extraction from atmosphere), there is no requirement for a desalination or water treatment plant. Furthermore, the air flow, either before the compressor (81) (intake air flow) or after the compressor (81) (discharge or compressed air flow) can be used to cool the geothermal energy system and the ORC power generator circuit and reduce or eliminate the requirement for sea water cooling. This is significant, because it means that the plant (1) can install inland. This is also advantageous in that the plant (1) may not have to locate close to a third-party carbon dioxide emitter.

In some embodiments, the plant (1) may comprise the multi-effect distillation (MED) desalination plant (84) without the carbon dioxide supplying device (separator (75)). In this embodiment, the second air compressor (90) may include an additional air supply to drive the start-up pump (18) to initiate circulation of the fluid (100), (106), (103), in the manner described above. The carbon dioxide necessary for the production of syngas may be sourced from a third party and/or from the flue gas which exits the chamber (45) through the flue gas line (300).

In some embodiments, the plant (1) may comprise both the multi-effect distillation (MED) desalination plant (84) and the carbon dioxide supplying device (separator (75)). In this embodiment, the first air compressor (81), and the second air compressor (90) may be one and the same compressor provided that the air compressor has sufficient power to feed the plurality of compressed air supply lines. Furthermore, the third turbine (78), and the fourth turbine (87) may be one and the same turbine provided that the turbine has sufficient power to drive the first air compressor (81) and the second air compressor (90).

As illustrated in Figure 5, the first fluid (100) exits the bore (200) and the well head (12) may be used to control the flow of fluid that exits the bore. The fluid (100) is directed to the heat exchanger (27) in which the second fluid (109) is heated. The exhaust fluid (106), which is the fluid that exits the heat exchanger (27) after the second fluid (109) has been heated, still has sufficient thermal energy which is used to drive the turbine (87) to produce mechanical outputs that drive compressors (90) and (91).

The compressor (90), in turn, draws in and compresses ambient air (11) to produce the first compressed air supply (13") and the second compressed air supply (14"). The first compressed air supply (13") is directed to the pump (93) for pumping saltwater from the sea or saltwater bore (16) to the MED plant (84) and to a condenser (34). The second compressed air supply (14") is directed to a pump (96) for pumping the fresh distilled water (17) produced by the MED plant (84) to the electrolyser (6). The compressor (91), in turn, may compress the hydrogen produced by the electrolyser (6) for storage in a storage tank.

The exhausted exhaust fluid (115), which is the fluid that exits the turbine (87) after production of the mechanical outputs, is still hot but has insufficient thermal energy to convert into useful work. Accordingly, the exhausted exhaust fluid (115) is directed to the MED desalination plant (84) to be cooled. The waste fluid (103), which is the fluid that exits the MED desalination plant (84) after the exhausted exhaust fluid (115) is cooled, is directed to, and re-injected into the bore (200) for re-heating. The optimum supply temperature for the MED desalination plant (84) is around 75° C to 85° C. The desalination plant (84) typically removes around 20° C to 25° C from the exhausted exhaust fluid (115), which provides a re-injection temperature of around 55° C to 65° C back into the bore (200).

As further illustrated in Figure 5, the MED plant (84) receives salt water (16a) from the sea or from a saltwater bore (16), extracts salt from the salt water and produces the fresh distilled water (17) and brine (19) as by-products. The fresh distilled water (17) may be pumped to the electrolyser (6) via the condenser (33) to be used in the electrolysis process. The pump (96) is used to pump the fresh distilled water (17) to the electrolyser (6). Upstream of the pump (96), waste fluid 18a from the electrolyser (6) may be combined with the fresh distilled water (17) so that both fluids, in combination (17a), may be pumped to the electrolyser (6). The waste fluid (18a) is the fluid that exits the electrolyser (6) after the electrolysis process.

As illustrated in Figure 5, a condenser (34) may be used to further reduce the temperature of the exhaust fluid (112) before the fluid is channelled to the heat exchanger (27) for re-heating. To this end, the condenser (34) may be a water-cooling system that draws in cool saltwater from the sea or saltwater bore (16). The heated saltwater that exits the condenser (34) may be channelled to the MED desalination plant (84) for desalination.

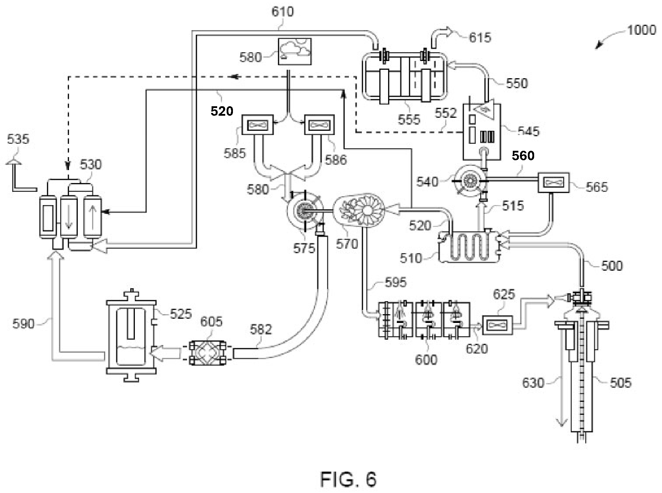

Figure 6 illustrates a plant (1000) comprising both a carbon dioxide plant 525, and a desalination plant 600. A first fluid (500) exits a geothermal well (505) at a temperature of 280° C and is directed to a heat exchanger (510) in a binary cycle plant to heat a second fluid (515). A first exhaust fluid (520) is the first fluid (500) that exits the heat exchanger (510) after heating the second fluid (515).

In the heat exchanger (510), the first fluid (500) heats the second fluid (515) to a temperature of 220° C. The heated second fluid (515) drives an ORC turbine (540) which in turn drives an electrical generator (545) to produce green electricity (550). Some of the green electricity (550) is used to power an electrolyser (555). Some of the green electricity (552) is used to power various processes in the SAF production facility (530) to produce SAF (535). A second exhaust fluid (560) from the ORC turbine (540) is condensed by a condenser (565) to a temperature of 40° C to be directed back to the heat exchanger (510) for re-heating by the first fluid (500).

The first exhaust fluid (520) having a temperature of 150° C is used to drive a screw expander (570) which in turn drives a compressor (575). The compressor (575) sucks in ambient air (580) from the atmosphere (580) using fans (585, 586), compresses the air, and directs the compressed air via compressed air line (582), to the carbon dioxide plant (525) where carbon dioxide (590) is extracted from the compressed ambient air. The carbon dioxide (590) from the carbon dioxide plant (525) may be directed to the SAF production facility (530). Some of the first exhaust fluid (520) may be used in the SAF production facility (530) to produce SAF (535).

Exhausted exhaust fluid (595) which is fluid that exits the screw expander (570) after driving the compressor (575), has a temperature of 80° C and is directed to the desalination plant (600) to be cooled to a temperature of 60° C by the desalination plant (600). Waste fluid (620) which is the cooled exhausted exhaust fluid (595) may further be cooled by a cooler (625) to a temperature of 50° C for re-injection into the geothermal well (505) to be heated.

In some embodiments (not shown), the fans (585, 586) may be heat exchangers whereby the exhausted exhaust fluid (595) flows through the heat exchangers (585, 586) to be cooled prior to re-injection into the geothermal well (505). In these embodiments, the heat exchangers (585, 586) cool the exhausted exhaust fluid (595) and heat the ambient air (580) upstream and/or downstream of the compressor (575). For example, the ambient air (580) may have a temperature of 23° C prior to flowing through the heat exchangers (585, 586) and will be heated to a temperature of 45° C upstream of the compressor (575) and may further be heated to a temperature of 100° C downstream of the compressor (575). The compressed air may flow through a heat recovery unit (605) prior to flowing to the carbon dioxide plant (525).

The electrolyser (555) splits fresh water into hydrogen (610) and oxygen (615). The hydrogen (610) is channelled to the SAF production facility (530) to produce SAF (535).

The geothermal well (505) may comprise a gas passage (630) through which carbon dioxide can be sequestered into the geology surrounding the well (505).

To provide some context and better illustrate the advantages of the present disclosure, in some embodiments, a dedicated five well geothermal plant (a plant having one injection well and four production wells converting thermal energy into work and the work solely used for carbon dioxide capture can potentially capture on average, 1 million tonnes (800,000kg to 1.2 million tonne by international standards) of carbon dioxide per year from the atmosphere without the requirement for electricity. By using residual thermal energy from the five well system that is also generating electricity, 750,000 kg of carbon dioxide may still nonetheless be captured from the atmosphere and used for fuel production (e.g. SAF production).

The amount of carbon dioxide required for SAF or typical low carbon fuel such as diesel production may be: 10kg of carbon dioxide to produce 4 litres of SAF or low carbon fuel. This means that an embodiment with a five well geothermal system can potentially produce enough carbon dioxide from residual thermal energy to make 300,000,000 litres of SAF per year. The electricity generated from that same five well system can produce 87,600,000 litres of SAF (depending on the method of SAF production used). This means that each five well system can produce more than enough carbon dioxide from the atmosphere with residual thermal energy, to produce 87,600,000 litres of SAF per year.

It will be appreciated that the commercial or production estimates provided above are given as good faith estimates only, to explain the invention and its potential associated benefits. However, the actual figures could vary widely in different embodiments of the invention, depending on factors such as the assumptions made, changing or improving technology, or particular local geological factors. The applicant expressly does not propose that the above estimates are binding or limiting on the breadth or utility of the invention.

It will be appreciated by persons skilled in the art that numerous variations and modifications may be made to the above-described embodiments, without departing from the scope of the following claims. The present embodiments are, therefore, to be considered in all respects as illustrative of the scope of protection, and not restrictively.

Unless defined otherwise, all technical and scientific terms used herein have the same meaning as commonly understood by one of ordinary skill in the art to which this disclosure belongs. Although any methods and materials similar or equivalent to those described herein can also be used in the practice or testing of the present disclosure, a limited number of the exemplary methods and materials are described herein.

As used herein and in the appended claims, the singular form of a word includes the plural, unless the context clearly dictates otherwise. Thus, the references "a," "an" and "the" are generally inclusive of the plurals of the respective terms. For example, reference to "a feature" includes a plurality of such "features." The term "and/or" used in the context of "X and/or Y" should be interpreted as "X," or "Y," or "X and Y.

It is to be understood that, if any prior art publication is referred to herein, such reference does not constitute an admission that the publication forms a part of the common general knowledge in the art, in Australia or any other country.

In the claims which follow and in the preceding description of the disclosure, except where the context requires otherwise due to express language or necessary implication, the word "comprise" or variations such as "comprises" or "comprising" is used in an inclusive sense, i.e. to specify the presence of the stated features but not to preclude the presence or addition of further features in various embodiments of the disclosure.

### LEGEND

| **No.** | **Item** | **No.** | **Item** |
|---|---|---|---|
| 1, 1000 | plant | 93 | Pump (saltwater to desalination plant) |
| 2 | Hydrogen line | 96 | Pump (fresh water to electrolyser) |
| 3 | Power generator/ first turbine | 100, 500 | First fluid |
| 4 | Carbon dioxide line | 103, 620 | Waste fluid |
| 5 | Fuel/syngas line | 106, 520 | Exhaust fluid |
| 6, 555 | Primary product supplying device / electrolyser | 109, 515 | Second fluid |
| 7 | Water line | 112, 560 | Second exhaust fluid |
| 8 | Liquid hydrocarbons line | 115, 595 | Exhausted exhaust fluid |
| 9 | Converting chamber | 200, 505 | Bore |
| 10 | Wax line | 200a | First end of bore |
| 11, 580 | Ambient air | 200b | Second end of bore |
| 12 | Well head | 203 | Surface / ground surface |
| 13, 13" | First compressed air supply | 206 | Geothermal reservoir |
| 14, 14" | Second compressed air supply | 209 | Injection bore |
| 15, 625 | Cooler | 212 | Production bore |
| 16 | Sea / saltwater source | 215 | Channels |
| 16a | Salt water (feed stream) | 300 | Flue gas |
| 17 | Fresh water | 300a | Recycled carbon dioxide |
| 17a | Combined fresh water and electrolyser waste fluid | 300b | Recycled carbon monoxide |
| 18 | Start-up pump | 305 | Jet fuel |
| 18a | Electrolyser waste fluid | 310 | Naphtha |
| 19 | Brine | 315 | Olefins |
| 21, 545 | Electric generator | 320 | Heavy distillate / oils |
| 24 | First flash tank | 325, 535 | eSAF |
| 27, 510 | Heat exchanger | 330 | Burner |
| 30, 540 | Second turbine | 335 | Oligomerisation |
| 33, 565 | Condenser | 340 | Hydrogenation |
| 34 | Condenser (saltwater-cooled condenser) | 345 | Polishing |
| 36 | RWGS reactor | 525 | Carbon dioxide plant |
| 42 | FT synthesis chamber | 530 | SAF production facility |
| 45 | Distillation chamber | 550,552 | Green electricity |
| 48 | Hydrocracking unit | 570 | Screw expander |
| 75 | Separator | 575 | Compressor |
| 78 | Third turbine | 582 | Compressed air line |
| 81 | First compressor | 585, 586 | Fans |
| **84,** 600 | Desalination plant | 590 | Carbon dioxide |
| 87 | Fourth turbine | 605 | Heat recovery unit |
| 90 | Second compressor (air compressor) | 610 | Hydrogen |
| 91 | Compressor (hydrogen compression ~ storage) | 615 | Oxygen |
| | | 630 | Gas passage |
| | | | |

## Claims

1. A plant for producing a fuel for the propulsion of a vehicle, the plant comprising:
at least one power generator to generate power from geothermal heat;
at least one bore extending from a surface to a geothermal reservoir within the earth's crust;
a first fluid to flow between the at least one power generator and the geothermal reservoir such that the first fluid transfers geothermal heat from the geothermal reservoir to the at least one power generator to generate the power;
at least one primary product supplying system, powered by the at least one power generator, to supply one or more primary product(s) for use in producing the fuel; and
at least one fuel production system, powered by the at least one power generator, comprising one or more chambers to convert a mixture comprising the one or more primary product into the fuel.

2. The plant of claim 1, wherein the one or more primary products comprises hydrogen gas, and wherein the at least one primary product supplying system comprises an electrolyser to supply the hydrogen gas.

3. The plant of claim 2, wherein the one or more primary products comprises fresh water to feed to the electrolyser, and wherein the at least one primary product supplying system comprises a desalination plant to supply the fresh water.

4. The plant of claim 3, wherein the fuel comprises syngas, and wherein the at least one fuel production system comprises a Reverse Water Gas Shift (RWGS) reactor for receiving carbon dioxide and the hydrogen to produce the syngas.

5. The plant of claim 4, wherein the one or more primary products comprises the carbon dioxide, and wherein the at least one primary product supplying system further comprises a separator to extract the carbon dioxide from ambient air.

6. The plant of claim 5, wherein the fuel comprises liquid hydrocarbons, and wherein the at least one fuel production system further comprises a Fischer-Tropsch (FT) synthesis chamber to convert the syngas into the liquid hydrocarbons.

7. The plant of claim 6, wherein the at least one fuel production system further comprises a distillation chamber to convert the liquid hydrocarbons into at least one of olefins, naptha, distillate, and heavy distillate.

8. The plant of claim 7, wherein the fuel comprises eSAF.

9. The plant of claim 8,
wherein the at least one power generator is a turbine configured to produce a mechanical output from the first fluid,
wherein the power generated by the turbine is the mechanical output,
wherein the mechanical output powers an electric generator to produce electricity, and
wherein the turbine produces exhaust fluid after production of the mechanical output.

10. The plant of claim 9, wherein residual heat in the exhaust fluid provides heat to the RWGS reactor for producing the syngas, and /or wherein electricity produced by the electric generator provides heat to the RWGS reactor for producing the syngas.

11. The plant of claim 9, wherein residual heat in the exhaust fluid provides heat to the (FT) synthesis chamber for producing the liquid hydrocarbons, and/or wherein electricity produced by the electric generator provides heat to the FT synthesis chamber for producing the liquid hydrocarbons.

12. The plant of claim 9, wherein residual heat in the exhaust fluid provides heat to the distillation chamber, and/or wherein electricity produced by the electric generator provides heat to the distillation chamber.

13. The plant of claim 9 further comprising a second turbine configured to be driven by the exhaust fluid to produce a power supply, the power supply driving a first air compressor, wherein the first air compressor draws in and compresses ambient air to provide a first compressed air supply, wherein the first compressed air supply supplies compressed ambient air to the separator to extract carbon dioxide.

14. The plant of claim 13, wherein residual heat in the exhaust fluid supplies heat to the separator during extraction of carbon dioxide from the compressed ambient air.

15. The plant of claim 14 further comprising a third turbine configured to be driven by exhaust fluid from the second turbine to produce a power supply to drive second air compressor, wherein the second air compressor draws in and compresses ambient air to provide a first compressed air supply and a second compressed air supply, wherein the first compressed air supply pumps salt water from a salt water source to the desalination plant for salt to be extracted from the salt water, and wherein the second compressed supply pumps fresh water produced from the desalination plant to the electrolyser.
